# EUROPEAN PATENT SPECIFICATION

(11) **EP 4 516 373 B1**
(45) Date of publication and mention of the grant of the patent: **18.11.2026**
(21) Application number: 24196596.1
(22) Date of filing: 27.08.2024
(51) Int. Cl.: A63H 17/26

(54) **BUILDING BLOCK COILOVER**
BAUSTEIN-COILING-OVER
ENROULEMENT DE BLOC DE CONSTRUCTION

(30) Priority: 30.08.2023 CN 202322339291 U
(43) Date of publication of application: 05.03.2025
(73) Proprietor: Yang, Dunhua, Shantou, Guangdong 515000 (CN)
(72) Inventor: Yang, Dunhua, Shantou, Guangdong 515000 (CN)
(74) Representative: von Bülow & Tamada

(56) References cited:
- CN-U- 207 137 363
- CN-U- 210 229 134
- US-A- 5 044 614
- US-A1- 2013 309 938
- US-A1- 2021 276 385
- US-B2- 8 794 643

## Description

The invention relates to a block coilover according to the preamble part of claim 1.

US 2021/276,385 A discloses a coilover that is a combined coil spring and shock absorber unit used in vehicle suspension systems. It consists of an outer tube with an external thread, on which an adjustment ring with an internal thread is held axially adjustable. A piston rod, guided in the outer tube by a guide, carries a spring perch that is arranged axially opposite the slot guide. Between the adjustment ring and the spring perch, there is a preload spring that provides the suspension. This design allows for precise tuning and adjustment of the vehicle's suspension characteristics, as both the vehicle height and the preload of the spring can be adjusted using the adjustment ring. By rotating the knob on the upper part of the shock absorber, the preload of the spring can be adjusted which, in turn, affects the overall suspension stiffness and ride height of a vehicle in which the shock absorber is installed.

US5044614A discloses a block coilover according to the preamble part of claim 1.

It is object of the invention to provide an improved coilover for an easy use in building block models and a building block model with a coilover.

The object is solved by the features of the independent claims. Advantageous embodiments are subject of the dependent claims.

According to one aspect of the invention, a building block coilover, comprises an outer tube with an external thread, on which an adjustment ring with an internal thread is held axially adjustable, a piston rod guided in the outer tube by a guide, with a spring perch arranged axially opposite the guide, and a preload spring held between the adjustment ring and the spring perch.

According to the invention, the guide is designed as a slot guide.

The invention is based on the thought that coilovers cannot be realized one-to-one in a building block model. In a building block model, missed construction steps sometimes necessitate disassemblies. Therefore, it is important that individual components are easily accessible and adjustable without having to dismantle the entire model. In contrast, coilovers must be designed very robustly to withstand the loads in a real vehicle. This stability typically requires that coilovers be completely removed from the building block model when adjustments or disassemblies are necessary.

The slot guide avoids this cumbersome disassembly because the slot element can move relative to the rest of the coilover. This means that adjustments and changes to the coilover can be made without having to remove the entire suspension unit from the model. The slot element, which is inserted into a slot on the piston rod, allows for easy axial movement and adjustment within the coilover. This greatly simplifies the integration of the coilover into the building block model and maintains the stability of the entire model without sacrificing the flexibility and adjustability of the suspension.

A slot guide is a mechanical guidance system that allows a component to move along a predetermined path or trajectory. This system is often used in machinery, tools, and various mechanical devices to enable precise and controlled movement. In the context of the present invention, which describes a coilover for a building block model, the slot guide consists of two main components: a slot element and a guide element.

The slot element can take various forms. It can be a slot stone that is guided in a slot or groove. Alternatively, it can also be a slot sleeve that is guided along a ridge. These different configurations allow for different types of movement and adjustment.

Preferably, a slot stone is used as the slot element. In this case, the guide element itself is designed as a slot or groove. A slot or groove ensures that the slot stone can only move along the desired axis, achieving axial limitation and guidance.

Overall, the slot guide ensures that the slot element moves in a controlled and stable manner within the guide element, allowing for precise adjustment and control of movement. This way, a stable guidance for the coilover in use is achieved, while it can still be easily disassembled in the model when adjustments need to be made, providing the necessary stability and flexibility for the building block model.

In an embodiment of the building block coilover the slot element is arranged axially opposite the spring perch on the piston rod. By axially positioning the slot element opposite the spring perch, the entire available space between the piston rod and the outer tube is efficiently used as a damping path. This means that the piston rod can move maximally within the outer tube, thereby achieving optimal damping performance. The slot guide ensures precise axial guidance of the piston rod without lateral play or unwanted movements that could impair the damping characteristics. The advantage of this arrangement is that the entire possible path of the piston rod is used to absorb shocks and vibrations. This leads to improved suspension and damping characteristics of the coilover. Especially in a building block model, it is important that the components work compactly and efficiently to enable a realistic and functional replica.

The slot stone can be attached to the piston rod in various ways, depending on the requirements for stability and flexibility of the system. One option is to fix the slot stone permanently to the piston rod. This can be achieved through welding, gluing, or mechanical connections such as screws or bolts. A permanent attachment ensures that the slot stone always remains in the correct position and cannot slip, which is particularly important when precise and stable guidance is required. Another option is a detachable attachment of the slot stone. This can be achieved through snap connections, clips, or screws. It is also possible to secure the detachable slot stone with a dedicated sleeve. A detachable attachment has the advantage that the slot stone can be easily removed and replaced if necessary, facilitating the maintenance and adjustment of the system.

In a prefered embodiment of the building brick coilover, the piston rod comprises an axially end-side slot running axially in the direction of the spring perch. This slot forms a first tab and a second tab radially opposite the first tab, which delimit the slot, and the slot element is held on the first tab. This allows for easy and quick assembly of the slot guide. The two tabs can be easily pressed inward and inserted into the outer tube to establish the slot connection, which saves time and significantly simplifies the assembly process. This ensures stable and precise guidance of the slot stone within the guide element while allowing for quick disassembly and adjustment of the system when necessary.

In a further embodiment of the building brick coilover, the tabs can have an axially end-side tab chamfer inclined towards the rotational axis of the piston rod. This specific shape of the tab chamfer allows the tabs to move inward automatically when the piston rod is inserted into the outer tube. This has the advantage that the piston rod can be positioned automatically during assembly without the need for additional tools. Due to the inclined tab chamfers, the tabs are automatically pressed inward when they come into contact with the guide element in the outer tube. This not only facilitates the assembly process but also ensures precise and secure positioning of the piston rod within the outer tube. The installation is thereby significantly simplified and accelerated, as no additional tools or aids are required to correctly position the piston rod.

If, in addition, the slot element is designed as a slot stone with a first axial end facing the spring perch and a second axial end opposite the first axial end, wherein the second axial end is formed with a slot chamfer inclined towards the rotational axis of the piston rod, then even the entire slot stone connection can be established without the need for additional tools.

In this configuration, the inclined slot chamfer of the second axial end of the slot stone ensures that the slot element automatically aligns and positions itself during installation. When the slot stone is inserted into the slot or groove of the piston rod, the inclined slot chamfer slides along the guide element, causing the slot stone to move into the correct position by itself. This allows for easy and tool-free assembly of the entire slot connection.

The combination of the inclined tab chamfers on the piston rod and the inclined slot chamfers on the slot stone ensures that both the piston rod and the slot stone are automatically and precisely positioned during installation. This significantly simplifies the assembly of the coilover, as no additional tools or manual adjustments are required to correctly position the components.

Additionally, a further slot element can be provided, wherein the further slot element is held on the second tab. By using a further slot element that is held on the second tab, the mechanical load is more evenly distributed across the piston rod. Both tabs each carry a slot element, which increases the stability and durability of the entire system. This prevents a single tab or slot element from being excessively stressed, which could lead to wear or failure. The improved distribution of mechanical loads ensures that the guide elements and the piston rod are loaded more evenly. This extends the lifespan of the coilover and enhances its performance, as the load is evenly distributed and the risk of material fatigue and damage is reduced.

The piston rod can have a shape symmetric to the rotational axis around the tabs. This symmetrical design leads to an even distribution of loads and reduces the risk of parts becoming jammed. A symmetrical distribution of loads ensures that the forces acting on the piston rod and guide elements are evenly distributed. This minimizes the likelihood of localized overloading, which could lead to jamming or blocking. This is particularly important when used as a building block model because lubricants cannot be easily used to facilitate smooth movement. Without lubricants, the components rely on precise mechanical fitting and even load distribution to function smoothly. A symmetrical piston rod helps ensure that the guide elements and tabs work together optimally without jamming. This improves the functional safety and reliability of the entire system, which is especially important in building block models that are often used by children.

An offset between the slot element and an axially end-side front face of the piston rod, which lies axially opposite the spring perch, can be present. This offset acts as a buffer zone in case of overloads, ensuring that the slot element is not immediately damaged. This buffer zone absorbs excessive forces and functions like a crumple zone used in vehicles to mitigate impact forces. The offset creates an area that can deform under excessive load before the forces reach the slot element. This protects the slot element from direct damage and increases the lifespan and reliability of the entire system. The advantage of this offset is that it serves as a mechanical safeguard, preventing sudden and high loads from directly impacting the slot element. This is particularly important in building block models, where the structural integrity and durability of the components are paramount. The buffer zone ensures that the system remains functional under extreme conditions and that the components are protected.

At least the piston rod can be an injection-molded part, which provides it with the necessary stability as well as elasticity in a very economical manner. Injection molding allows for the production of complex geometries with high precision and consistency, which is crucial for the functionality of the coilover. The process enables the integration of stable and elastic properties in a single component. This is particularly important to withstand the loads that occur during operation while providing sufficient flexibility to effectively dampen shocks and vibrations. Moreover, injection molding is a highly economical manufacturing process. It allows for the cost-effective mass production of components, reducing the overall cost of the coilover. The efficiency of the injection molding process ensures that the piston rod is both stable and elastic without the need for expensive materials or elaborate post-processing.

According to another aspect of the invention, a building block vehicle model comprises a chassis, at least one wheel carrying the chassis movably, and a building block coilover according to any of the preceding claims, which connects the wheel to the chassis.

The above described characteristics, features and advantages of this invention as well as the manner and way how they are achieved will get further comprehensive based on following description of the embodiments that will be explained in further detail in connection with the figures. It shows:
Fig. 1 a perspecitve view of a vehicle model that is constructed from building blocks,
Fig. 2 a perspecitve view of a building block coilover to be used in the building block model of Fig. 1,
Fig. 3 an explosion view of the building block coilover of Fig. 2, and
Fig. 4 an explosion view of a piston rod used in the building block coilover of Figs. 2 and 3.

In the figures, equal technical elements will be provided with equal reference signs and described only one time. The figures are only of schematic nature and does in particular not disclose any real geometric dimension.

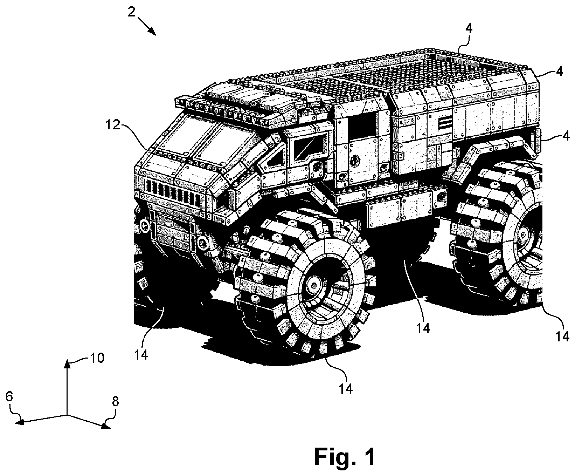

Reference is made to Fig. 1 that shows a schematic view of a vehicle model 2 that is constructed from building blocks 4. For the sake of clarity, only some of the building blocks 4 visible in Fig. 1 are provided with a reference sign.

The vehicle 2 is regarded in a space that is spanned by a driving direction 6, a traverse direction 8 perpendicular to the driving direction 6, and a height direction 10 perpendicular to both the driving direction 6 and the traverse direction 8. It comprises a chassis 12 that is movably carried in the driving direction 6 on four wheels 14.

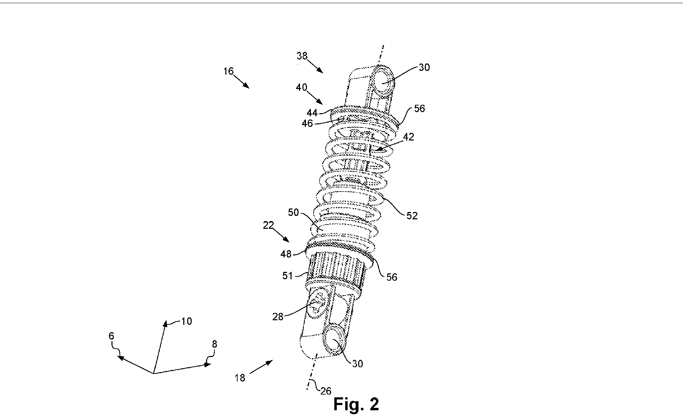

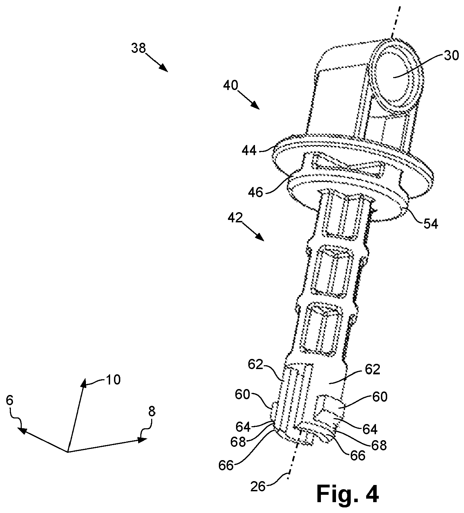

Each wheel 14 carries the chassis via a coilover 16 that is shown in Figs. 2 to 4, which will be discussed hereinafter.

The coilover 16 itself is constructed from building blocks that are dimensioned in line with the standard defined by the company Lego A/S. It comprises an outer tube 18 with an external thread 20, on which an adjustment ring 22 with an internal thread 24 is held in a way such that the adjustment ring 22 can be moved in the height direction 10 upward and downward by turning around a rotation axis 26.

The outer tube 18 has three parts that are seen in the height direction 10 arranged above each other. At the bottom, the outer tube 18 includes a connection port to assemble the coilover 16 to the vehicle model 2, which is composed of a shaft hole 28 to carry a not further shown shaft and an axis hole 30 to carry a not further shown axis. The function of these holes 28, 30 is well known and does not need to be further explained. The arrangement of the shaft hole 28 and the axis hole 30 follows the principle of a so-called cross beam that is known, for example, from the Chinese design patent CN 70 2016 030 017 542 and does not need to be further explained.

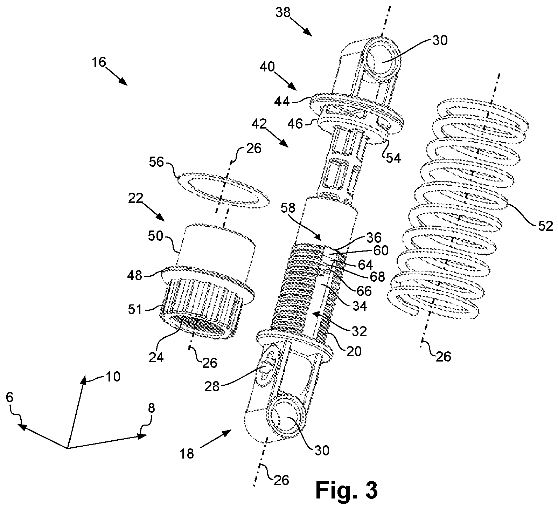

Seen in the height direction 10 above the connection port composed of the holes 28, 30, the outer tube includes a first tube part with the external thread 20 followed by a second tube part without the external thread 20. In these two tube parts, the outer tube 18 is hollow and forms an accommodation space 32. In the area of the external thread 20 and thus in the first tube part, the outer tube 18 contains two slots 34 that run along the height direction and are formed symmetrically with respect to the rotation axis 26. From these two slots 34, only one slot is visible in the perspective of Fig. 3. Both slots end at the transition between the first and second tube parts, which forms two end stops 36, one at each slot 34, wherein in the perspective of Fig. 3 only one end stop 36 is visible.

The coilover 16 further includes a piston rod 38 that is guided in the accommodation space 32 of the outer tube 18. Before explaining this guidance in further detail, the construction of the piston rod 38 should be explained in further detail. It contains, similar to the outer tube 18, a connection port that itself contains another axis hole 30. In an assembled state, the connection port of the outer tube 18 and the connection port of the piston rod 38 are arranged to form a brick similar to the crossbeam disclosed by CN 70 2016 030 017 542.

Seen in the height direction, below the connection port the piston rod 38 includes a spring perch 40 that is followed by a piston staff 42 that is insertable into the accommodation space 32 in a way that will be described later.

The spring perch 40 consists of a spring perch flange 44 that carries a spring perch pedestal 46 with some cutouts to save material and lighten the weight. Likewise, the adjustment ring 22 contains an adjustment ring flange 48 that carries an adjustment ring pedestal 50.

After screwing the adjustment ring 22 by grapping it at a grapping area 51 onto the external thread 20 of the outer tube 18, a preload spring 52 can be arranged on the adjustment ring flange 48 that will be radially supported by the adjustment ring pedestal 50 to keep the adjustment ring 22 aligned with the rotation axis 26. Next, the piston staff 42 will be inserted into the accommodation space 32, and the spring perch pedestal 46 will be inserted into the preload spring 52 from a side opposite the adjustment ring flange 48 such that the preload spring 52 will be sandwiched by the adjustment ring flange 48 and the spring perch flange 44. To ease this insertion, the spring perch pedestal 46 contains a pedestral chamfer 54 that guides the relative radial position between the preload spring 52 and the spring perch flange 44 during insertion.

By this means, the coilover 16 is basically assembled with a damping function in the car model 2. Usually, the preload spring 52 is made from a material that is significantly harder than the material of the rest of the coilover 16. To protect the other parts of the coilover 16 from being mechanically overstressed, washers 56 can be inserted into the stack of the adjustment ring flange 48, preload spring 52, and spring perch flange 44.

To prevent this stack from releasing in or against the height direction of the piston staff 42 of the piston rod 38, the guidance of the piston staff 42 in the height direction 10 and fixation perpendicular to the height direction 10 in the accommodation space 32 of the outer tube 18 is embodied as a slot guide 58, which will be described in further detail hereinafter.

Part of the slot guide 58 are the slots 34 with the end stops 36. These slots 34 guide slot elements designed as slot stones 60. That is, in the state, the piston staff 42 is inserted into the accommodation space 32, the slot stones 60 are guided in the slots 34, wherein the movement of the slot stones 60 is limited by the end stops 36 in the height direction 10 and by the bottom of the accommodation space 32 against the height direction 10.

To ease the insertion into the accommodation space 32, the piston staff 42 is radially split into two tabs 62, each holding one of the slot stones 60 on its radial outside. By that means, the tabs 62 can be radially inclined towards the rotation axis until the slot stones 60 are insertable into the accommodation space 32. As soon as the slot stones 60 reach the slots 34, the tabs 62 press their slot stones 60 radially outward and engage the slot stones 60 into the slot guide 58.

To facilitate the insertion of the slot stones 60 into the accommodation space 32, each slot stone 60 comprises a slot chamfer 64 on the bottom side, seen in the height direction 10, that is inclined towards the rotation axis 26. When inserting the piston staff 42 into the accommodation space 32, the slot chamfers 64 exert a force perpendicular to the rotation axis 26 on the slot stones 60 and force the tabs 62 to radially incline towards the rotation axis. By this means, the piston staff 42 can be inserted into the accommodation space 32 only by exerting a force against the height direction 10.

To further facilitate the assembly of the coilover 16, each tab 62 of the piston staff 42 includes a tab chamfer 66 on the bottom side of each tab 62, seen in the height direction. These tab chamfers 66 are analogous to the slot chamfers 64 and inclined towards the rotation axis 26 but serve another purpose. As the piston staff 42 and the accommodation space 32 require basically the same diameter to effect the guidance, it can require a certain level of skill to find the not shown insertion hole of the accommodation space 32 with the piston staff 42. To reduce these required skills, the tab chamfers 66 act like a catcher that radially aligns the piston staff 42 to the correct position with reference to the insertion hole of the accommodation space 32.

Finally, there is an offset 68 between the slot stones 60 and the tab chamfers 64 at each tab 62. This offset 68 acts like a buffer zone and protects the slot chamfers 64 from being flattened in case of mechanical shocks on the bottom of the accommodation space 32.

The coilover 16 ensures that the axis holes 30 on the outer tube 18 and the piston rod 38 are precisely aligned in a parallel manner. Additionally, the shaft hole 28 is aligned exactly parallel to these axis holes 30. This precise alignment guarantees that the coilover 16 can be used in the same manner as a building block, just like the building block known from CN 70 2016 030 017 542.

The parallel alignment of the axis holes 30 and the shaft hole 28 ensures that the mechanical connections between the components are robust and reliable. This alignment is crucial for maintaining the structural integrity and functional stability of the assembled vehicle model 2. By adhering to the same dimensional standards and alignment principles as the well-known building block from CN 70 2016 030 017 542, the coilover 16 can seamlessly integrate into existing building block systems. This compatibility allows for versatile applications and easy incorporation into various building block models, providing the same ease of use and reliability as the established components.

## Claims

1. Block coilover (16), comprising:
- an outer tube (18) with an external thread (20), on which an adjustment ring (22) with an internal thread (24) is held axially adjustable,
- a piston rod (38) guided in the outer tube (18) by a guide (58), with a spring perch (40) arranged axially opposite the guide (58), and
- a preload spring (52) held between the adjustment ring (22) and the spring perch (40),
- **characterized in that** the block coilover is a building block coilover and the guide (58) is designed as a slot guide (58).

2. Building block coilover (16) according to claim 1, wherein the slot guide (58) comprises a slot (34) and a slot element (60) guided in the slot (34).

3. Building block coilover (16) according to claim 2, wherein the slot element (60) is arranged axially opposite the spring perch (40) on the piston rod (38).

4. Building block coilover (16) according to claim 2 or 3, wherein the piston rod (38) comprises an axially end-side slot running axially in the direction of the spring perch (40), so that a first tab (62) and a second tab (62) radially opposite the first tab (62) are formed, which delimit the slot, and wherein the slot element (60) is held on the first tab (62).

5. Building block coilover (16) according to claim 4, wherein the tabs (62) have an axially end-side tab chamfer (66) inclined towards a rotational axis (26) of the piston rod (38).

6. Building block coilover (16) according to claim 5, wherein the piston rod (38) has a shape symmetric to the rotational axis (26) around the tabs (62).

7. Building block coilover (16) according to any of the preceding claims 4 to 6, comprising a further slot element (60), wherein the further slot element (60) is held on the second tab (62).

8. Building block coilover (16) according to any of the preceding claims 2 to 7, wherein the slot element (60) is designed as a slot stone with a first axial end facing the spring perch (40) and a second axial end opposite the first axial end, and wherein the second axial end is formed with a slot chamfer (64) inclined towards the rotational axis (26) of the piston rod (38).

9. Building block coilover (16) according to any of the preceding claims 4 to 8, comprising an offset (68) between the slot element (60) and an axially end-side front face of the piston rod (38), which lies axially opposite the spring perch (40).

10. Building block coilover (16) according to any of the preceding claims, wherein at least the piston rod (38) is an injection-molded part.

11. Building block vehicle model (2) comprising:
- a chassis (12),
- at least one wheel (14) carrying the chassis (12) movably, and
- a building block coilover (16) according to any of the preceding claims, which connects the wheel (14) to the chassis (12).

## Patentansprüche

1. Block-Gewindefederbein (16), umfassend:
- ein Außenrohr (18) mit einem Außengewinde (20), auf dem ein Einstellring (22) mit einem Innengewinde (24) axial verstellbar gehalten ist,
- eine durch eine Führung (58) im Außenrohr (18) geführte Kolbenstange (38), mit einem axial gegenüber der Führung (58) angeordneten Federteller (40), und
- eine zwischen dem Einstellring (22) und dem Federteller (40) gehaltene Vorspannfeder (52),
- **dadurch gekennzeichnet, dass** das Block-Gewindefederbein ein Baustein-Gewindefederbein ist und die Führung (58) als Schlitzführung (58) ausgebildet ist.

2. Baustein-Gewindefederbein (16) nach Anspruch 1, wobei die Schlitzführung (58) einen Schlitz (34) und ein in dem Schlitz (34) geführtes Schlitzelement (60) umfasst.

3. Baustein-Gewindefederbein (16) nach Anspruch 2, wobei das Schlitzelement (60) an der Kolbenstange (38) axial gegenüber dem Federteller (40) angeordnet ist.

4. Baustein-Gewindefederbein (16) nach Anspruch 2 oder 3, wobei die Kolbenstange (38) einen axial endseitigen Schlitz umfasst, der axial in Richtung des Federtellers (40) verläuft, sodass eine erste Lasche (62) und eine der ersten Lasche (62) radial gegenüberliegende zweite Lasche (62) ausgebildet sind, die den Schlitz begrenzen, und wobei das Schlitzelement (60) an der ersten Lasche (62) gehalten ist.

5. Baustein-Gewindefederbein (16) nach Anspruch 4, wobei die Laschen (62) eine axial endseitige Laschenfase (66) aufweisen, die zu einer Drehachse (26) der Kolbenstange (38) hin geneigt ist.

6. Baustein-Gewindefederbein (16) nach Anspruch 5, wobei die Kolbenstange (38) um die Laschen (62) herum eine zur Drehachse (26) symmetrische Form aufweist.

7. Baustein-Gewindefederbein (16) nach einem der vorhergehenden Ansprüche 4 bis 6, umfassend ein weiteres Schlitzelement (60), wobei das weitere Schlitzelement (60) an der zweiten Lasche (62) gehalten ist.

8. Baustein-Gewindefederbein (16) nach einem der vorhergehenden Ansprüche 2 bis 7, wobei das Schlitzelement (60) als Schlitzstein mit einem dem Federteller (40) zugewandten ersten axialen Ende und einem dem ersten axialen Ende gegenüberliegenden zweiten axialen Ende ausgebildet ist und wobei das zweite axiale Ende mit einer zur Drehachse (26) der Kolbenstange (38) hin geneigten Schlitzfase (64) ausgebildet ist.

9. Baustein-Gewindefederbein (16) nach einem der vorhergehenden Ansprüche 4 bis 8, umfassend einen Versatz (68) zwischen dem Schlitzelement (60) und einer axial endseitigen Stirnfläche der Kolbenstange (38), die dem Federteller (40) axial gegenüberliegt.

10. Baustein-Gewindefederbein (16) nach einem der vorhergehenden Ansprüche, wobei zumindest die Kolbenstange (38) ein Spritzgussteil ist.

11. Baustein-Fahrzeugmodell (2), umfassend:
- ein Fahrgestell (12),
- mindestens ein das Fahrgestell (12) beweglich tragendes Rad (14), und
- ein Baustein-Gewindefederbein (16) nach einem der vorhergehenden Ansprüche, das das Rad (14) mit dem Fahrgestell (12) verbindet.

## Revendications

1. Combiné fileté de bloc (16), comprenant :
- un tube extérieur (18) pourvu d'un filetage extérieur (20), sur lequel une bague de réglage (22) pourvue d'un filetage intérieur (24) est maintenue de manière axialement réglable,
- une tige de piston (38) guidée dans le tube extérieur (18) par un guidage (58), avec un siège de ressort (40) disposé axialement à l'opposé du guidage (58), et
- un ressort de précharge (52) maintenu entre la bague de réglage (22) et le siège de ressort (40),
- **caractérisé en ce que** le combiné fileté de bloc est un combiné fileté de bloc de construction et que le guidage (58) est conçu sous la forme d'un guidage par fente (58).

2. Combiné fileté de bloc de construction (16) selon la revendication 1, dans lequel le guidage par fente (58) comprend une fente (34) et un élément de fente (60) guidé dans la fente (34).

3. Combiné fileté de bloc de construction (16) selon la revendication 2, dans lequel l'élément de fente (60) est disposé sur la tige de piston (38), axialement à l'opposé du siège de ressort (40).

4. Combiné fileté de bloc de construction (16) selon la revendication 2 ou 3, dans lequel la tige de piston (38) comprend une fente située à une extrémité axiale et s'étendant axialement en direction du siège de ressort (40), de telle sorte qu'une première languette (62) et une seconde languette (62), radialement opposée à la première languette (62), sont formées et délimitent la fente, et dans lequel l'élément de fente (60) est maintenu sur la première languette (62).

5. Combiné fileté de bloc de construction (16) selon la revendication 4, dans lequel les languettes (62) présentent un chanfrein de languette (66), situé à une extrémité axiale et incliné vers un axe de rotation (26) de la tige de piston (38).

6. Combiné fileté de bloc de construction (16) selon la revendication 5, dans lequel la tige de piston (38) présente, autour des languettes (62), une forme symétrique par rapport à l'axe de rotation (26).

7. Combiné fileté de bloc de construction (16) selon l'une quelconque des revendications précédentes 4 à 6, comprenant un autre élément de fente (60), dans lequel l'autre élément de fente (60) est maintenu sur la seconde languette (62).

8. Combiné fileté de bloc de construction (16) selon l'une quelconque des revendications précédentes 2 à 7, dans lequel l'élément de fente (60) est conçu sous la forme d'un coulisseau présentant une première extrémité axiale tournée vers le siège de ressort (40) et une seconde extrémité axiale opposée à la première extrémité axiale, et dans lequel la seconde extrémité axiale est pourvue d'un chanfrein de coulisseau (64) incliné vers l'axe de rotation (26) de la tige de piston (38).

9. Combiné fileté de bloc de construction (16) selon l'une quelconque des revendications précédentes 4 à 8, comprenant un décalage (68) entre l'élément de fente (60) et une face frontale située à une extrémité axiale de la tige de piston (38), laquelle se trouve axialement à l'opposé du siège de ressort (40).

10. Combiné fileté de bloc de construction (16) selon l'une quelconque des revendications précédentes, dans lequel au moins la tige de piston (38) est une pièce moulée par injection.

11. Modèle de véhicule en blocs de construction (2), comprenant :
- un châssis (12),
- au moins une roue (14) portant le châssis (12) de manière mobile, et
- un combiné fileté de bloc de construction (16) selon l'une quelconque des revendications précédentes, qui relie la roue (14) au châssis (12).
